# EUROPEAN PATENT SPECIFICATION

(11) **EP 3 627 667 B1**
(45) Date of publication and mention of the grant of the patent: **03.09.2025**
(21) Application number: 18195248.2
(22) Date of filing: 18.09.2018
(51) Int. Cl.: H02K 9/20, H02K 11/00, F16D 65/78, B60T 5/00, B60T 13/74, H02K 5/20

(54) **WHEEL BRAKE ACTUATOR AND METHOD OF CONTROLLING A COOLING SYSTEM OF AN ELECTRIC MOTOR**
RADBREMSZYLINDER UND VERFAHREN ZUR STEUERUNG EINES KÜHLSYSTEMS EINES ELEKTROMOTORS
ACTIONNEUR DE FREIN SUR ROUE ET PROCÉDÉ DE COMMANDE D'UN SYSTÈME DE REFROIDISSEMENT D'UN MOTEUR ÉLECTRIQUE

(43) Date of publication of application: 25.03.2020
(73) Proprietor: KNORR-BREMSE Systeme für Nutzfahrzeuge GmbH, 80809 München (DE)
(72) Inventor: Mlinárcsek, Csaba, 1165 Budapest (HU); Németh, Huba, 1116 Budapest (HU); Kokrehel, Csaba, 1119 Budapest (HU); Szabo, Janos, 1042 Budapest (HU); Tihanyi, VIktor, 1032 Budapest (HU); Buch, Andreas, 82024 Taufkirchen (DE); Sipos, András, 81249 Munich (DE); Trimpe, Robert, 82234 Wessling (DE); Pahle, Wolfgang, 83707 Bad Wiessee (DE); Blessing, Michael, 80687 Munich (DE); Klingner, Matthias, 82272 Moorenweis (DE)

(56) References cited:
- EP-A1- 2 445 090
- EP-A2- 0 231 785
- WO-A1-2017/149303
- CN-A- 1 663 837
- CN-A- 106 402 205
- CN-B- 103 795 179
- DE-A1- 102006 035 696
- FR-A1- 2 897 483
- FR-A1- 3 032 759
- JP-A- 2001 248 667
- US-A1- 2006 131 115

## Description

The present invention relates to electrical motors for actuating wheel brake actuators and wheel brake actuators containing such electrical motors. Further, the invention provides a method of controlling a cooling system of an electric motor.

Electro-mechanic, including electro-pneumatic, wheel brake actuators are commonly used on commercial vehicles. Such wheel brake actuators generate significant heat dissipation during operation which is increased in comparison with mechanic wheel-brake actuators due to inclusion of electric motors. High temperatures decrease a wear-resistance of the electrical motors and other components of the electro-mechanic wheel brake actuators. Therefore, an efficient cooling mechanism for electro-mechanic wheel brake actuators is desirable.

At present air cooling systems are used to cool down wheel brake actuators and particularly electric motors for actuating these wheel brake actuators. However, the efficiency of the air cooling systems for the wheel brake actuators is limited by the air convection which depends directly on the air circulation and hence velocity of the vehicle. A convection coefficient is small at a low speed due to small air velocities and high bulk air temperatures around the wheel brake actuator. Therefore, at low speed the cooling is insufficient, since the heat removal is significantly limited due to the low convection coefficient. Consequently, an increased necessity to remove heat typically exists when the vehicle has slowed down or already stopped to release stress of the wheel actuator components.

FR2897483 A1 describes an actuator having an electric motor inscribed in a housing and comprising a stator integrated to the housing and a rotor rotating a hollow rotating shaft.

JP2001248667 A describes a receptacle provided in a casing of a motor having pin contacts connected to its inside power feed cables and through holes. A plug shell 27 connected to the receptacle 21 has socket contacts connected to the pin contacts at connection time and connected to power feed cables in a vehicle side and through holes. A pipe inserting cables with a margin connects one end to the plug shell, the other end is extended to a part covered with no water, inside/outside parts of the casing are connected through the through holes.

CN106402205 A describes a wheel-side self-powered brake actuator for an automotive electromechanical brake system. It includes a cooling fan and a temperature sensor, the cooling fan is provided on one side of the lithium battery, and the wheel-side self-powered automobile electronic mechanical braking system is self-powered The heat dissipation channel is also provided inside the brake actuator. The heat dissipation channel is provided with a metal heat dissipation net. The temperature sensor transmits the measured temperature to the electronic control unit. When the electronic control unit determines that the temperature reaches a certain value, the cooling fan is controlled to rotate.

US2006131115 A1 describes a brake system using an electric motor to provide sufficient braking force by generating the self boosting operation using the motor and rotational inertia of the brake disc, thereby stabilizing the braking operation. A coolant jacket is provided around the motor, a cooling pump supplies the coolant to coolant jacket, pipe, and coolant storage are further provided for actively cooling down heat generated from motor.

FR3032759 A1 describes an actuator for a vehicle component. The electric motor of the actuator can be cooled by conduction with the casing. Where appropriate, the housing incorporates a cooling circuit in which circulates a cooling fluid, such as liquid water, which can cool the housing and the components of the actuator.

EP2445090 A1 describes a dynamo-electric machine with brake device. The magnetic body of the holding brake is also cooled by a cooling system, the inlet and outlet of which take place via the end shield. Furthermore, due to an extremely small distance gap between the magnet body and a shaft, the waste heat of the shaft is also absorbed via the magnet body and released to the cooling medium.

It is an object of the present invention to overcome the disadvantages of the prior art, particularly to provide an alternative cooling system which increases efficiency of cooling of the electrical motors of the wheel brake actuators, specifically upon a slow speed operation, and improves the wear-resistance of the wheel brake actuators.

The object is solved by the subject matter of independent claims 1 and 9.

According to the invention an electric motor for actuating a wheel brake actuator comprises a stator, a rotor, and a cooling system for a cooling fluid to cool one or more parts of the electric motor. Due to a higher heat capacity of the cooling fluid in comparison to air, the efficiency of the electric motor cooling, particularly at a low-speed operation, is improved. The cooling fluid may comprise one or more of a liquid coolant, gaseous coolant, solid coolant or combination thereof.

According to an embodiment the electric motor further comprises a liquid pump configured to supply the cooling fluid to the cooling system. The electric motor may also be connected to a cooling device for cooling a cooling fluid. The cooling device may comprise a compressor based refrigerator or an electric cooling device comprising, for example, a Peltier element. According to a further embodiment the cooling system comprises a cooling layer which is arranged on one or more parts of the electric motor to cool down the electric motor due to evaporating of the cooling fluid supplied to the cooling layer.

According to an alternative embodiment the cooling system comprises a cooling jacket for the cooling fluid, the cooling jacket comprising one or more parts being arranged opposite one or more parts of the electric motor, wherein a cooling channel for passing the cooling fluid is defined between the one or more parts of the cooling jacket and the one or more parts of the electric motor opposite the one or more parts of the cooling jacket.

According to an alternative embodiment the cooling system comprises a cooling jacket for the cooling fluid, the cooling jacket being arranged in contact with one or more parts of the electric motor, the cooling jacket comprising a cooling channel for passing the cooling fluid. The cooling channel provides an improved control of the flow velocity of the cooling fluid and the possibility to vary or define the order in which the cooling fluid is supplied to different parts of the electric motor. For example, it can be efficient to define the cooling channel in such a manner on the electric motor that electronic components arranged on the electric motor are cooled first by the cooling fluid and part of the electric motor are subsequently cooled. Hence the path of the cooling channel on the electric motor is arranged so that components that need to be cooled primarily are arranged upstream of other components that require subordinated cooling and are arranged downstream in the cooling channel. According to a further embodiment the cooling jacket comprises the shape of a cylinder or a portion thereof surrounding at least a portion of the electric motor and comprising an inlet port of the cooling channel for an inlet of the cooling fluid into the cooling channel and an outlet port of the cooling channel for an outlet of the cooling fluid from the cooling channel. A cylindrical shape of the cooling jacket conforms to the shape of the electric motor and hence provides a good contact with the electric motor and its outer surface and good cooling efficiency.

According to another embodiment the stator comprises additional components, particularly electronic components, arranged above an outer surface of the stator and wherein the cooling channel extends in contact with or adjacent at least some of the additional components and a portion of the outer surface of the stator free from the additional components. This provides a selective cooling of the components and parts of the electric motor and increases the overall speed of cooling down the electric motor. An additional housing or additional housings may be provided for the electronic components. According to yet another embodiment a flow direction of the cooling fluid through the cooling channel is arranged such that the cooling fluid after entering the inlet port first comes into contact with or flows above or adjacent at least some of the additional components and subsequently one or more portions of the outer surface of the stator free from the additional components before exiting the outlet port. Consequently, the electrical components which are more sensitive to the heat are cooled first and the additional protection of the electrical components from the destruction is provided.

According to a further embodiment the cooling system comprises one or more secondary cooling channels separated from the primary cooling channel, the one or more secondary cooling channels being in contact with, above or adjacent one or more parts of the electric motor for cooling the one or more parts.

According to a further embodiment the cooling system provides cooling, heating or thermo-control of one or more parts of the electric motor including the additional components, particularly the electronic components.

According to another aspect of the present invention a wheel brake actuator comprising an electric motor including the above described embodiments is provided.

According to an embodiment the cooling jacket at least partially forms a part of a housing of the wheel brake actuator and the inlet port and the outlet port of the cooling jacket are formed in the housing of the wheel brake actuator. This configuration can simplify the construction and provides a higher integration of the actuator.

According to another embodiment the cooling system is arranged between the housing of the wheel brake actuator and the outer surface of the stator of the electric motor.

According to another aspect of the present invention a method of controlling a cooling system of an electric motor for actuating a wheel brake actuator is provided.

The method includes steps of: receiving a temperature signal by a controller from one or more temperature sensors coupled to the Electric motor at fixed time intervals; comparing at the controller the temperature signal with a threshold value; and if the temperature signal is above the threshold value, providing a control signal by the controller to supply a cooling fluid to the cooling system.

According to an embodiment the threshold value is pre-determined based on temperature history of the electric motor or dynamically determined during the electric motor operation. The temperature history can be stored in a data base in a memory.

Preferred embodiments are given by the dependent claims.

It is noted that the method according to the invention can be find such that it realizes an electric motor according to the described aspects of the invention, and vice versa.

The following detailed description refers to the accompanying drawings. The same reference numbers may be used in different drawings to identify the same or similar elements. In the following description, for purposes of explanation and not limitation, specific details are set forth such as particular structures, functionality etc. in order to provide a thorough understanding of the various aspects of the claimed invention.

It will be apparent to those skilled in the art having the benefit of the present disclosure that the various aspects of the invention claimed may be practiced in other examples that depart from these specific details. In certain instances, descriptions of well-known devices and methods are omitted so as not to obscure the description of the present invention with unnecessary detail.
- Figure 1: shows a schematic cross-sectional view of an electric motor according to one of the embodiments the invention;
- Figure 2: shows a general view of the electric motor according to Figure 1;
- Figure 3: shows a flowchart of a method according to the present invention; and
- Figure 4: shows a schematic arrangement of interaction between the electric motor and the cooling system.

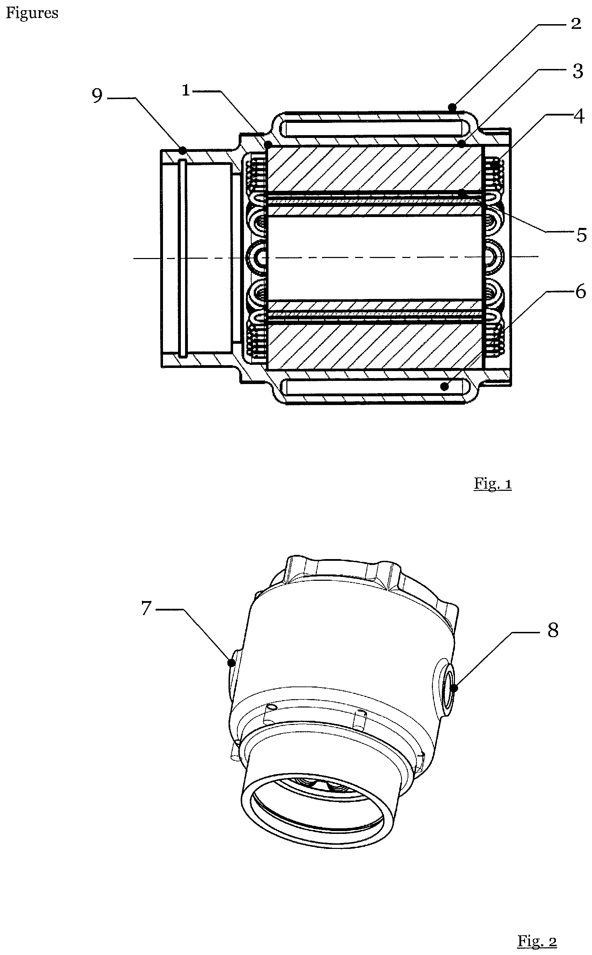

In an embodiment illustrated in Figure 1 an electric motor 1 is included in a cooling jacket 2 of a cooling system 11 (not shown in Figure 1), wherein the cooling jacket 2 is formed as a part of a housing 9 of a wheel brake actuator. The force, in particular, linear force of the wheel brake actuator is generated by the electric motor 1, comprising a stator 3 and a rotor 5. The stator 3 contains coils 4 of the electric motor 1. The stator 3 is fixed to the housing 9 of the wheel brake actuator, particularly, to its part forming the cooling jacket 2 and is adjacent to a wall of the cooling jacket 2. The cooling jacket 2 is arranged in contact with one or more parts of the electric motor 1. The cooling jacket 2 comprises a cooling channel 6 for passing a cooling fluid.

Referring to Figure 2, the cooling jacket 2 has the shape of a cylinder which surrounds at least a portion of the electric motor 1. The cooling jacket 2 comprises an inlet port 7 of the cooling channel 6 for an inlet of the cooling fluid into the cooling channel 6 and an outlet port 8 of the cooling channel 6 for an outlet of the cooling fluid from the cooling channel 6. A pump for supplying a cooling fluid can be connected to the inlet port 7. Furthermore, the inlet port 7 and the outlet port 8 can be connected to a cooling device to provide a closed cooling cycle.

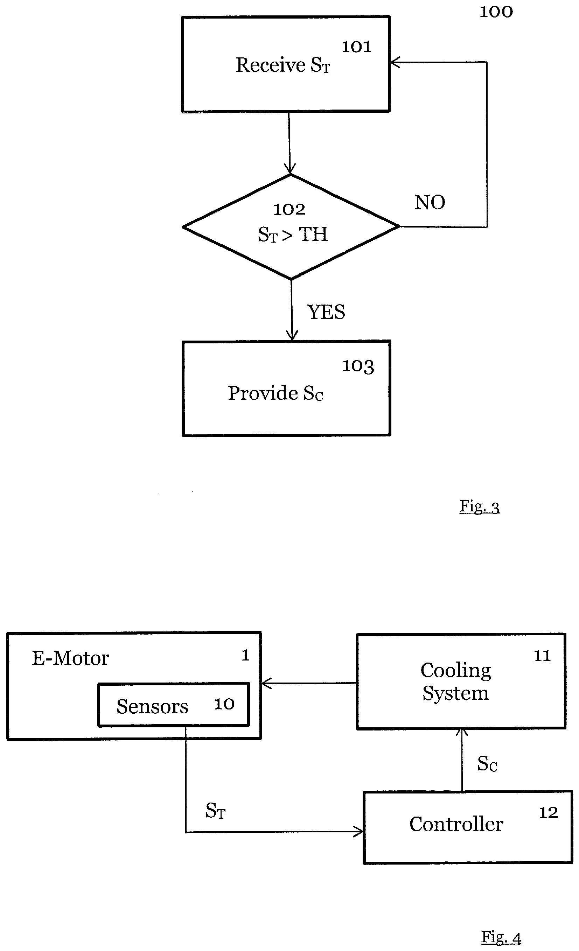

With regard to Figure 3, a method 100 of controlling of a cooling system of an electric motor for actuating a wheel brake actuator is illustrated. A controller of the cooling system receives at a step 101 a temperature signal Sₜ from one or more temperature sensors coupled to the electric motor. The temperature signal Sₜ is received periodically at fixed time intervals. After the temperature signal Sₜ is received the controller compares at a step 102 the received temperature signal Sₜ with a threshold value TH. The threshold value TH may be pre-determined based on a temperature history of the electric motor in different operating conditions and stored in a database connected to the controller. Alternatively, the threshold value TH may be dynamically determined during the electric motor operation based on the temperatures defined by the temperature signal received at the fixed time intervals. If the controller determines at the step 102 that the temperature signal Sₜ is above the threshold value TH, the controller provides at a step 103 a control signal S_{c} to the cooling device and or the pump to supply a cooling fluid to the cooling system. After the cooling fluid is supplied to the cooling system, the cooling system starts cooling the electric motor. If the controller determines that the temperature signal Sₜ drops below the threshold value TH or at least becomes equal to the threshold value TH, the controller may provide an interruption signal to interrupt supplying the cooling fluid to the cooling system. Thus, the consumption power for supplying an cooling the cooling fluid is decreased and the cooling system operates only when it is required due to the operation conditions of the electric motor.

Referring to Figure 4, the controller 12 is illustrated in connection with the electric motor 1 and the cooling system 11. The temperature signal Sₜ is received at the controller 12 from the one or more temperature sensors 10 coupled to the electric motor 1. After the controller 12 performs a comparing step 102 illustrated in Figure 3, the controller 12 sends the control signal S_{c} either to supply a cooling fluid to the cooling system 11 or to interrupt supplying the cooling fluid to the cooling system 11. The control signal S_{c} may be supplied to a liquid pump configured to supply the cooling fluid to the cooling system 11. The cooling system 11 then starts or interrupts cooling the electric motor 1.

The features disclosed in the above description, the figures and the claims may be significant for the realization of the invention in its different embodiments individually as in any combination.

### Reference sign list

- 1: electric motor
- 2: cooling jacket
- 3: stator
- 4: coils of stator
- 5: rotor
- 6: cooling channel
- 7: inlet port
- 8: outlet port
- 9: housing of wheel brake actuator
- 10: sensors
- 11: cooling system
- 12: controller

## Claims

1. A wheel brake actuator comprising an electric motor (1) for actuating the wheel brake actuator and a housing, the electric motor (1) including a stator (3) and a rotor (5), wherein the electric motor (1) further comprises a cooling system (11) for a cooling fluid to cool one or more parts of the electric motor (1), the cooling system (11) being arranged between the housing and the outer surface of the stator, the cooling system (11) comprising a cooling jacket (2) having the shape of a cylinder surrounding the electric motor (1) and forming a part of the housing (9) of the wheel brake actuator, wherein a cooling channel (6) for passing the cooling fluid is defined between the cooling jacket (2) and the electric motor (1), wherein the stator (3) comprises one or more electronic components arranged above an outer surface of the stator (3) and wherein the cooling channel (6) extends in contact with the one or more electronic components and a portion of the outer surface of the stator (3) free from the one or more electronic components and wherein a flow direction of the cooling fluid through the cooling channel (6) is arranged such that the cooling fluid after entering an inlet port (7) of the cooling jacket (2) first comes into contact with or flows above or adjacent at least some of the electronic components and subsequently one or more portions of the outer surface of the stator (3) free from the electronic components before exiting an outlet port (8) of the cooling jacket (2).

2. The wheel brake actuator of claim 1, further comprising one or more temperature sensors coupled to the electric motor (1);
a controller configured to receive (101) a temperature signal from the one or more temperature sensors at fixed time intervals, compare the temperature signal with a threshold value; and if the temperature signal is above the threshold value, provide (103) a control signal by the controller to supply a cooling fluid to the cooling system.

3. The wheel brake actuator of claim 1 or 2, wherein the electric motor (1) further comprises a pump configured to supply the cooling fluid to the cooling system.

4. The wheel brake actuator of any of claims 1-3, wherein the cooling jacket (2) comprises one or more parts being arranged opposite one or more parts of the electric motor (1).

5. The wheel brake actuator of any of claims 1-4, wherein the cooling jacket (2) is arranged in contact with one or more parts of the electric motor (1).

6. The wheel brake actuator of any of claims 1-5, wherein the cooling system (11) comprises one or more secondary cooling channels separated from the cooling channel (6), the one or more secondary cooling channels being in contact with, above or adjacent one or more parts of the electric motor (1) for cooling the one or more parts.

7. The wheel brake actuator of any of claims 1-6, wherein the cooling system (11) provides cooling, heating or thermo-control of one or more parts of the electric motor (1) including the additional components, particularly the electronic components.

8. The wheel brake actuator any of claims 1-7, wherein the inlet port (7) and the outlet port (8) of the cooling jacket (2) are formed in the housing (9) of the wheel brake actuator.

9. A method (100) of controlling of a cooling system of a wheel brake actuator according to anyone of claims 1 to 8, comprising an electric motor for actuating the wheel brake actuator and a housing, the cooling system (11) being arranged between the housing and the outer surface of the stator, the method including steps of:
- receiving (101) a temperature signal by a controller from one or more temperature sensors coupled to the electric motor at fixed time intervals;
- comparing (102) at the controller the temperature signal with a threshold value;
- if the temperature signal is above the threshold value, providing (103) a control signal by the controller to supply a cooling fluid to the cooling system.

10. The method (100) of claim 9, **characterized in that** the threshold value is pre-determined based on temperature history of the electric motor or dynamically determined during the electric motor operation.

## Patentansprüche

1. Radbremsbetätigungsvorrichtung umfassend einen Elektromotor (1) zum Betätigen der Radbremsbetätigungsvorrichtung und ein Gehäuse, wobei der Elektromotor (1) einen Stator (3) und einen Rotor (5) einschließt, wobei der Elektromotor (1) weiter ein Kühlsystem (11) für ein Kühlfluid zum Kühlen eines oder mehrerer Teile des Elektromotors (1) umfasst, wobei das Kühlsystem (11) zwischen dem Gehäuse und der Außenfläche des Stators angeordnet ist, wobei das Kühlsystem (11) einen zylinderförmigen Kühlmantel (2) umfasst, der den Elektromotor (1) umgibt und einen Teil des Gehäuses (9) der Radbremsbetätigungsvorrichtung bildet, wobei zwischen dem Kühlmantel (2) und dem Elektromotor (1) ein Kühlkanal (6) zum Leiten des Kühlfluids definiert ist, wobei der Stator (3) ein oder mehrere elektronische Komponenten umfasst, die über einer Außenfläche des Stators (3) angeordnet sind, und wobei sich der Kühlkanal (6) in Kontakt mit der einen oder den mehreren elektronischen Komponenten und einem Abschnitt der Außenfläche des Stators (3) erstreckt, der frei von der einen oder den mehreren elektronischen Komponenten ist, und wobei eine Strömungsrichtung des Kühlfluids durch den Kühlkanal (6) so angeordnet ist, dass das Kühlfluid nach dem Eintritt in eine Einlassöffnung (7) des Kühlmantels (2) zuerst mit zumindest einigen der elektronischen Komponenten in Kontakt kommt oder über oder neben ihnen fließt und anschließend mit einem oder mehreren Abschnitten der Außenfläche des Stators (3), die frei von elektronischen Komponenten sind, bevor es aus einer Auslassöffnung (8) des Kühlmantels (2) austritt.

2. Radbremsbetätigungsvorrichtung nach Anspruch 1, die weiter einen oder mehrere Temperatursensoren umfasst, die mit dem Elektromotor (1) gekoppelt sind;
Steuereinheit, die dazu konfiguriert ist, in festen Zeitintervallen ein Temperatursignal von dem einen oder den mehreren Temperatursensoren zu empfangen (101), das Temperatursignal mit einem Schwellenwert zu vergleichen; und, wenn das Temperatursignal über dem Schwellenwert liegt, durch die Steuereinheit ein Steuersignal bereitzustellen (103), um dem Kühlsystem ein Kühlfluid zuzuführen.

3. Radbremsbetätigungsvorrichtung nach Anspruch 1 oder 2, wobei der Elektromotor (1) weiter eine Pumpe umfasst, die dazu konfiguriert ist, das Kühlfluid an das Kühlsystem zuzuführen.

4. Radbremsbetätigungsvorrichtung nach einem der Ansprüche 1-3, wobei der Kühlmantel (2) ein oder mehrere Teile umfasst, die gegenüber einem oder mehreren Teilen des Elektromotors (1) angeordnet sind.

5. Radbremsbetätigungsvorrichtung nach einem der Ansprüche 1-4, wobei der Kühlmantel (2) in Kontakt mit einem oder mehreren Teilen des Elektromotors (1) angeordnet ist.

6. Radbremsbetätigungsvorrichtung nach einem der Ansprüche 1-5, wobei das Kühlsystem (11) einen oder mehrere sekundäre Kühlkanäle umfasst, die vom Kühlkanal (6) getrennt sind, wobei der eine oder die mehreren sekundären Kühlkanäle in Kontakt mit, über oder neben einem oder mehreren Teilen des Elektromotors (1) sind, um das eine oder die mehreren Teile zu kühlen.

7. Radbremsbetätigungsvorrichtung nach einem der Ansprüche 1-6, wobei das Kühlsystem (11) Kühlung, Heizung oder Temperaturregelung eines oder mehrerer Teile des Elektromotors (1) einschließlich der zusätzlichen Komponenten, insbesondere der elektronischen Komponenten, bereitstellt.

8. Radbremsbetätigungsvorrichtung nach einem der Ansprüche 1-7, wobei die Einlassöffnung (7) und die Auslassöffnung (8) des Kühlmantels (2) in dem Gehäuse (9) der Radbremsbetätigungsvorrichtung gebildet sind.

9. Verfahren (100) zum Steuern eines Kühlsystems einer Radbremsbetätigungsvorrichtung nach einem der Ansprüche 1 bis 8, die einen Elektromotor zum Betätigen der Radbremsbetätigungsvorrichtung und ein Gehäuse umfasst, wobei das Kühlsystem (11) zwischen dem Gehäuse und der Außenfläche des Stators angeordnet ist, wobei das Verfahren die folgenden Schritte umfasst:
- Empfangen (101) eines Temperatursignals durch eine Steuereinheit von einem oder mehreren Temperatursensoren, die mit dem Elektromotor gekoppelt sind, in festen Zeitintervallen;
- Vergleichen (102) des Temperatursignals mit einem Schwellenwert an der Steuereinheit;
- wenn das Temperatursignal über dem Schwellenwert liegt, Bereitstellen (103) eines Steuersignals durch die Steuereinheit zum Zuführen eines Kühlfluids zum Kühlsystem.

10. Verfahren (100) nach Anspruch 9, **dadurch gekennzeichnet, dass** der Schwellenwert basierend auf der Temperaturhistorie des Elektromotors vorab bestimmt wird oder während des Betriebs des Elektromotors dynamisch bestimmt wird.

## Revendications

1. Actionneur de frein de roue comprenant un moteur électrique (1) pour actionner l'actionneur de frein de roue et un boîtier, le moteur électrique (1) incluant un stator (3) et un rotor (5), dans lequel le moteur électrique (1) comprend en outre un système de refroidissement (11) pour un fluide de refroidissement destiné à refroidir une ou plusieurs pièces du moteur électrique (1), le système de refroidissement (11) étant agencé entre le boîtier et la surface extérieure du stator, le système de refroidissement (11) comprenant une chemise de refroidissement (2) se présentant sous la forme d'un cylindre entourant le moteur électrique (1) et faisant partie du boîtier (9) de l'actionneur de frein de roue, dans lequel un canal de refroidissement (6) destiné au passage du fluide de refroidissement est défini entre la chemise de refroidissement (2) et le moteur électrique (1), dans lequel le stator (3) comprend un ou plusieurs composants électroniques agencés au-dessus d'une surface extérieure du stator (3) et dans lequel le canal de refroidissement (6) s'étend en contact avec les un ou plusieurs composants électroniques et une partie de la surface extérieure du stator (3) dépourvue des un ou plusieurs composants électroniques et dans lequel une direction d'écoulement du fluide de refroidissement à travers le canal de refroidissement (6) est agencée de telle sorte que le fluide de refroidissement, une fois entré dans un orifice d'entrée (7) de la chemise de refroidissement (2), vient d'abord en contact avec ou s'écoule au-dessus ou à proximité d'au moins certains des composants électroniques, puis une ou plusieurs parties de la surface extérieure du stator (3) dépourvue des composants électroniques avant de sortir par un orifice de sortie (8) de la chemise de refroidissement (2).

2. Actionneur de frein de roue selon la revendication 1, comprenant en outre un ou plusieurs capteurs de température couplés au moteur électrique (1) ;
un dispositif de commande configuré pour recevoir (101) un signal de température provenant des un ou plusieurs capteurs de température à des intervalles de temps fixes, comparer le signal de température à une valeur seuil ; et si le signal de température est supérieur à la valeur seuil, fournir (103) un signal de commande par le dispositif de commande pour fournir un fluide de refroidissement au système de refroidissement.

3. Actionneur de frein de roue selon la revendication 1 ou 2, dans lequel le moteur électrique (1) comprend en outre une pompe configurée pour fournir le fluide de refroidissement au système de refroidissement.

4. Actionneur de frein de roue selon l'une quelconque des revendications 1-3, dans lequel la chemise de refroidissement (2) comprend une ou plusieurs pièces agencées en face d'une ou plusieurs pièces du moteur électrique (1).

5. Actionneur de frein de roue selon l'une quelconque des revendications 1-4, dans lequel la chemise de refroidissement (2) est agencée en contact avec une ou plusieurs pièces du moteur électrique (1).

6. Actionneur de frein de roue selon l'une quelconque des revendications 1-5, dans lequel le système de refroidissement (11) comprend un ou plusieurs canaux de refroidissement secondaires séparés du canal de refroidissement (6), les un ou plusieurs canaux de refroidissement secondaires étant en contact avec, au-dessus ou à proximité d'une ou plusieurs pièces du moteur électrique (1) pour refroidir les une ou plusieurs pièces.

7. Actionneur de frein de roue selon l'une quelconque des revendications 1-6, dans lequel le système de refroidissement (11) assure le refroidissement, le chauffage ou la régulation thermique d'une ou plusieurs pièces du moteur électrique (1) incluant les composants supplémentaires, en particulier les composants électroniques.

8. Actionneur de frein de roue selon l'une quelconque des revendications 1-7, dans lequel l'orifice d'entrée (7) et l'orifice de sortie (8) de la chemise de refroidissement (2) sont formés dans le boîtier (9) de l'actionneur de frein de roue.

9. Procédé (100) de commande d'un système de refroidissement d'un actionneur de frein de roue selon l'une quelconque des revendications 1 à 8, comprenant un moteur électrique pour actionner l'actionneur de frein de roue et un boîtier, le système de refroidissement (11) étant agencé entre le boîtier et la surface extérieure du stator, le procédé incluant les étapes suivantes :
- la réception (101) d'un signal de température, par un dispositif de commande, provenant d'un ou plusieurs capteurs de température couplés au moteur électrique à intervalles de temps fixes ;
- la comparaison (102), au niveau du dispositif de commande, du signal de température avec une valeur seuil ;
- si le signal de température est supérieur à la valeur seuil, la fourniture (103) d'un signal de commande, par le dispositif de commande, pour fournir un fluide de refroidissement au système de refroidissement.

10. Procédé (100) selon la revendication 9, **caractérisé en ce que** la valeur seuil est prédéterminée sur la base d'un historique de températures du moteur électrique ou déterminée dynamiquement pendant le fonctionnement du moteur électrique.
